# EUROPEAN PATENT APPLICATION

(11) **EP 4 832 065 A1**
(43) Date of publication of application: **28.10.2026**
(21) Application number: 24908286.8
(22) Date of filing: 16.12.2024
(51) Int. Cl.: H01M 4/13, H01M 4/134, H01M 4/40, H01M 4/48, H01M 4/139, H01M 4/1395

(54) **LITHIUM METAL ELECTRODE FOR LITHIUM SECONDARY BATTERY AND METHOD OF MANUFACTURING SAME**

(30) Priority: 18.12.2023 KR 20230184178
(71) Applicant: POSCO Holdings Inc., Pohang-si, Gyeongsangbuk-do 37859 (KR)
(72) Inventor: BAE, Hongyeul, Pohang-si, Gyeongsangbuk-do 37859 (KR); KIM, Jinhong, Pohang-si, Gyeongsangbuk-do 37859 (KR); LEE, Garam, Pohang-si, Gyeongsangbuk-do 37859 (KR); BAE, Weon Soo, Pohang-si, Gyeongsangbuk-do 37859 (KR); LEE, Sang Lag, Pohang-si, Gyeongsangbuk-do 37859 (KR)
(74) Representative: Pfenning, Meinig & Partner mbB
(86) International application number: PCT/KR2024/097017
(87) International publication number: WO 2025/136004

(57) **Abstract**

The present invention relates to a lithium metal electrode and a method for manufacturing the same. The lithium metal electrode of the present invention includes a current collector, a metal layer positioned on at least one surface of the current collector and including a lithium alloy, and a protective layer positioned on the metal layer, wherein the protective layer has a porosity of 30% to 60%, and a content of a binder is 5 wt% to 15 wt% based on 100 wt% of an entire amount of amorphous carbon in the protective layer.

## Description

### [TECHNICAL FIELD]

The present invention relates to a lithium secondary battery, and more particularly, to a lithium metal electrode for a lithium secondary battery and a method for manufacturing the same.

### [BACKGROUND ART]

In order to reduce the cost and increase the energy density of secondary batteries, it has become essential to use a lithium metal electrode as a negative electrode of a lithium secondary battery. Specifically, all-solid-state batteries have recently attracted attention as next-generation batteries for high energy density applications such as electric vehicles (EVs).

Since all-solid-state batteries do not use a liquid electrolyte, they have advantages in various aspects, such as excellent stability, high-voltage operation, improved energy density of a battery pack due to reduction of cooling- and safety-related auxiliary materials, and operability over a wide temperature range. In order to substantially realize high energy density in such an all-solid-state battery, a thick graphite-based negative electrode material having low capacity should be replaced with lithium, which is thin and has high capacity, and, in view of economic feasibility and energy density, a thin-film lithium metal electrode having a thickness of substantially 10 µm to 20 µm is required.

In general, in order to form a lithium metal electrode, a method of rolling a copper foil, which is a current collector, and a lithium foil, or a method of depositing a lithium thin film on a copper foil, has been used. However, in the case of rolling, it is difficult to achieve a wide width and thinning, and in the case of deposition, there is a disadvantage of low economic feasibility. In order to solve these disadvantages, a method of forming a negative electrode by electrodepositing lithium on a copper foil using an electrochemical method has been proposed.

However, when a lithium metal electrode is used as a negative electrode in an all-solid-state battery, a high-resistance phase is generated by a reaction between lithium and an all-solid-state electrolyte, and lithium dendrites are continuously generated or high-resistance lithium by-products are generated due to local non-uniformity of current density during charging and discharging, whereby problems occur in which the battery cannot perform its function due to a short circuit or overvoltage during charging and discharging, or capacity is reduced.

In particular, when forming a protective layer, interest has increased in increasing adhesion strength between a metal layer and the protective layer, increasing bonding strength, and preventing dendrite growth to improve lifespan characteristics when applied to a battery.

### [DETAILED DESCRIPTION OF THE INVENTION]

### [Technical Problem]

A lithium metal electrode for a lithium secondary battery according to an embodiment of the present invention is intended to provide a lithium metal battery in which adhesion strength between a metal layer and a protective layer is increased, bonding strength is increased, and growth of dendrites is suppressed, thereby improving lifespan characteristics when applied to a battery.

A method for manufacturing a lithium metal electrode for a lithium secondary battery according to another embodiment of the present invention is intended to provide a method for manufacturing a lithium metal electrode for a lithium secondary battery having the above-described advantages.

### [Technical Solution]

A lithium metal electrode according to an embodiment of the present invention may include a current collector, a metal layer positioned on at least one surface of the current collector and including a lithium alloy, and a protective layer positioned on the metal layer, wherein the protective layer may have a porosity of 30% to 60%. In an embodiment, the protective layer may include amorphous carbon and a binder. Based on 100 wt% of the entire amorphous carbon in the protective layer, a content of the binder may be 5 wt% to 15 wt%.

In an embodiment, a bonding strength between the current collector and the protective layer may be 30 mN/cm to 80 mN/cm. In an embodiment, the metal layer may include a lithium alloy layer including an alloy made of lithium and a lithiophilic metal.

In an embodiment, the lithiophilic metal may be at least one selected from the group consisting of In, Ag, Sn, Zn, Si, Al, and Bi. In an embodiment, the metal layer may include a lithium metal layer positioned on the lithium alloy layer.

In an embodiment, the protective layer may further include ceramic particles. In an embodiment, the amorphous carbon and the ceramic particles in the protective layer may be in a weight ratio of 97:3 to 70:30.

A method for manufacturing a lithium metal electrode according to another embodiment of the present invention may include forming a coating layer on at least one surface of a current collector using a coating composition including a lithiophilic component, forming a protective layer by applying a slurry onto a surface of the coating layer, placing the current collector on which the coating layer and the protective layer are formed in a plating solution and then placing a lithium supply source at a predetermined distance from the protective layer, and applying a current between the current collector and the lithium supply source to form a metal layer including a lithium alloy in which the lithiophilic component included in the coating layer and lithium precipitated from the lithium supply source are alloyed, wherein the forming of the protective layer on the surface of the coating layer may include mixing, in the slurry, a first solvent and a second solvent having different boiling points.

In an embodiment, the second solvent may have a higher boiling point than the first solvent. In an embodiment, a ratio of the first solvent to the second solvent may be 60:40 to 90:10.

In an embodiment, in the step of forming the protective layer on the surface of the coating layer, the protective layer may include amorphous carbon and a binder. Based on 100 wt% of the entire amorphous carbon in the protective layer, a content of the binder may be 5 wt% to 15 wt%. In the step of forming the protective layer on the surface of the coating layer, a difference between boiling points of the first solvent and the second solvent may be 50°C or more.

In an embodiment, the step of forming the protective layer on the surface of the coating layer may include drying a solvent, and the step of drying the solvent may include a first drying step and a second drying step. In an embodiment, in the step of forming the protective layer, the drying step may be performed at a temperature higher than a boiling point of the first solvent.

In an embodiment, the first drying step may be performed in a temperature range of 90°C or higher. In an embodiment, the second drying step may be performed in a temperature range of 185°C or higher.

### [Advantageous Effects]

A lithium metal electrode according to an embodiment of the present invention is intended to provide a lithium metal battery in which adhesion strength between a metal layer and a protective layer is increased, bonding strength is increased, and growth of dendrites is suppressed, thereby improving lifespan characteristics when applied to a battery, by controlling porosity in the protective layer within an appropriate range.

A method for manufacturing a lithium metal electrode according to another embodiment of the present invention is intended to provide a lithium metal battery in which excessive use of a binder is reduced, adhesion strength between a metal layer and a protective layer is increased, bonding strength is increased, and growth of dendrites is suppressed, thereby improving lifespan characteristics when applied to a battery, by mixing and adding, in a slurry, a first solvent and a second solvent having different boiling points when the protective layer is applied as the slurry onto the metal layer.

### [BRIEF DESCRIPTION OF THE DRAWINGS]

FIGS. 1A and 1B show lithium metal electrodes manufactured according to an embodiment.
FIG. 2 is a schematic view of a method for manufacturing a lithium metal electrode of the present invention.
FIG. 3 is a scanning electron microscope (SEM) photograph of a cross-section when an alloy material coating layer is formed on a current collector according to an embodiment of the present invention.
FIG. 4A is a scanning electron microscope (SEM) photograph of a surface when a protective layer of the present invention is formed on a current collector coated with an alloy material according to an embodiment of the present invention, and FIG. 4B is a scanning electron microscope (SEM) photograph of a cross-section thereof.
FIGS. 5A to 5F show cross-sectional microstructures and pore image mappings of protective layers of Examples and Comparative Examples of the present invention.
FIG. 6 shows measurement of bonding strength of protective layers of Examples and Comparative Examples of the present invention using a peel strength tester.
FIGS. 7A and 7B are photographs comparing electrodeposition appearances between a current collector and an ion-concentration protective layer when electrodeposition is performed at a maximum current density according to an embodiment of the present invention.
FIG. 8 shows a cross-sectional structure in which lithium is precipitated between a protective layer and a current collector by an electrodeposition process according to an embodiment of the present invention.
FIG. 9 shows charge/discharge lifespan results of Examples and Comparative Examples of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

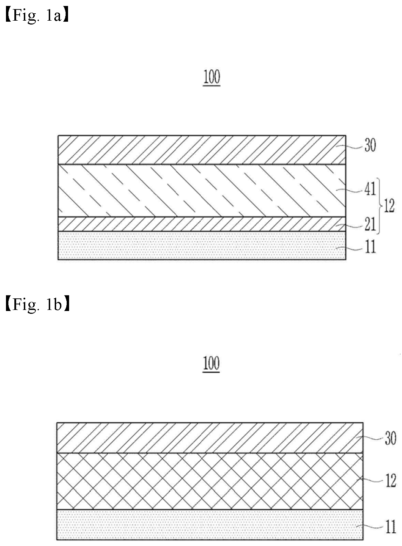

FIGS. 1A and 1B show a lithium metal electrode 100 manufactured according to an embodiment.

Referring to FIG. 1A, the lithium metal electrode 100 according to an embodiment includes a current collector 11 and a metal layer 12 positioned on at least one surface of the current collector 11, and further includes a protective layer 30 positioned on another surface of the metal layer 12 facing the current collector 11.

The current collector 11 may be a member for electrical connection in a lithium secondary battery. The current collector 11 may have a form of a foil, but is not limited thereto, and may have, for example, a form of a mesh, a foam, a rod, a wire, or a sheet woven from wires or fibers.

As the current collector 11, a material having electrical conductivity and having limited reactivity with lithium may be used. Specifically, the material of the current collector 11 may be, for example, one of copper, nickel, titanium, stainless steel, gold, platinum, silver, tantalum, ruthenium, and alloys thereof, carbon, a conductive polymer, and a composite fiber in which a conductive layer is coated on a non-conductive polymer, or a combination thereof.

In an embodiment, the current collector 11 may have a thickness of 1 µm to 50 µm. When the current collector 11 is excessively thick, there is a problem in that the weight of the battery increases and energy density of the battery decreases. When the current collector 11 is excessively thin, there is a risk of overheating damage during high-current operation, and the current collector may be damaged by tension during a battery manufacturing process.

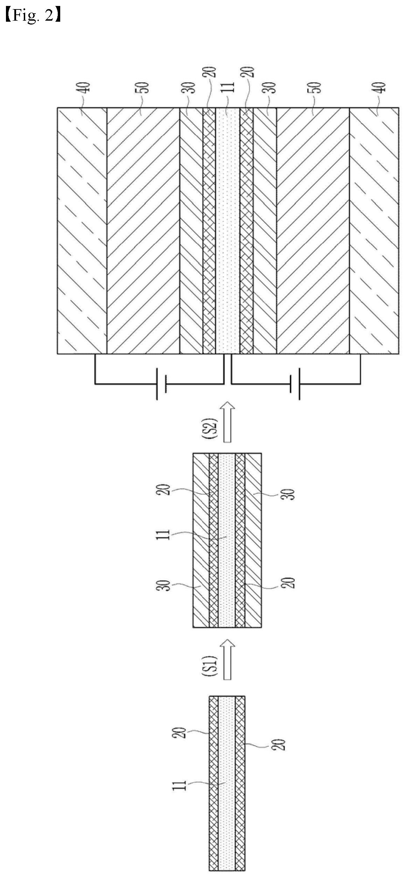

The metal layer 12 is positioned on the current collector 11 and may include a lithium alloy layer 21 including a lithium alloy and a lithium metal layer 41 positioned on the lithium alloy layer 21. The lithium alloy layer 21 may be a layer including a lithium alloy in which a lithiophilic component included in the metal layer 12 on the current collector 11 and lithium precipitated from a lithium supply source 40 of FIG. 2 are alloyed by applying a current between the current collector 11 and the lithium supply source 40.

When an electrodeposition process is performed by applying a high current in order to increase an electrodeposition rate when forming the metal layer 12, there is a problem in that performance of a lithium secondary battery deteriorates. However, when the metal layer 12 is formed in a structure including the lithium alloy layer 21 containing a lithium component as in the present embodiment, excessive generation of fine lithium particles or destruction of the protective layer 30 positioned on a surface of the lithium metal layer 41 already generated in the electrodeposition process can be prevented even if the electrodeposition process is performed by applying a high current.

Specifically, since the metal layer 12 of an embodiment includes the lithium alloy layer 21 containing a lithium component, when the lithium metal layer 41 is formed on the lithium alloy layer 21 by applying a high current in the electrodeposition process, initially generated lithium particles may be induced to grow well, thereby forming particles having a coarse structure, and at the same time the lithium metal layer 41, and consequently the metal layer 12, may have a uniform surface.

Accordingly, performance of a secondary battery to which the lithium metal electrode according to the present embodiment is applied, specifically charge/discharge characteristics, can be remarkably improved. In addition, since a lithium metal electrode for a secondary battery having high performance can be manufactured even when an electrodeposition process is performed at a high rate by applying a high current, productivity of the lithium metal electrode for a secondary battery can also be remarkably improved.

The lithium alloy layer 21 may be an alloy made of lithium and a lithiophilic metal, wherein the lithiophilic metal may be at least one selected from the group consisting of In, Ag, Sn, Zn, Si, Al, and Bi, but is not limited thereto.

In the present embodiment, the lithium alloy layer 21 includes the lithiophilic metal. When the lithium alloy layer 21 includes the lithiophilic metal as described above, electrons can be smoothly supplied from the current collector because the lithium alloy layer includes a lithiophilic metal having high electronic conductivity, and lithium ions are reduced, thereby providing an advantage in that electrodeposition of the lithium metal layer is easily performed. The metal layer 21 serves to help lithium be more effectively precipitated under the protective layer 30 during a charging process of a battery.

In an embodiment, the metal layer 12 may have a thickness of 1 µm to 100 µm, and more specifically 5 µm to 30 µm. When the metal layer 12 is excessively thick, when the lithium metal electrode of the present embodiment is applied to a secondary battery, there is a problem in that the weight and volume of the battery increase and energy density decreases. In addition, since time and cost of an electrodeposition process increase in proportion to thickness when forming the metal layer 12, the thickness of the metal layer 12 is preferably 100 µm or less.

When the metal layer 12 is excessively thin, when the lithium metal electrode of the present embodiment is applied to a secondary battery, there is a problem in that charge/discharge lifespan of the battery deteriorates. Specifically, during charging and discharging of the battery, lithium in the battery is gradually consumed due to side reactions between lithium included in the negative electrode active material layer, that is, the metal layer of the present invention, and the electrolyte solution, whereby battery capacity decreases, and since the retained amount of lithium capable of replenishing lithium consumed during charging and discharging decreases, charge/discharge lifespan of the battery deteriorates. Accordingly, the thickness of the metal layer 12 is preferably 1 µm or more.

The protective layer 30 may have a porosity of 30% to 60%. Specifically, in order to measure porosity of a cross-section of the protective layer 30, mirror polishing was performed using an Ilion 697 processing apparatus manufactured by Gatan, and a microstructure was observed using a GEMINI-500 scanning electron microscope manufactured by ZEISS. Specifically, the porosity in the protective layer 30 was measured as a porosity of a two-dimensional plane using an ImageJ image program developed by the National Institutes of Health (NIH) from a photograph observed by a scanning electron microscope. A pore area ratio was confirmed through the measured image value.

The porosity may be 35% to 60%, and more specifically 40% to 60%. As the porosity satisfies the above-described range, there is an advantage in that lithium is precipitated at high speed on a lower surface of the protective layer, thereby providing excellent characteristics when applied to a battery.

When the porosity exceeds the upper limit of the above-described range, the density of the protective layer becomes too low, causing problems such as dendrite growth during battery operation. When the porosity is below the lower limit of the above-described range, the density of the protective layer becomes too high, causing a problem in that it is difficult to grow lithium on the lower surface of the protective layer through an electrodeposition process.

The protective layer 30 is positioned on the metal layer 12 and may include amorphous carbon. When lithium metal is used as a negative electrode in an all-solid-state battery, high resistance is generated by a reaction between the all-solid-state electrolyte and lithium, and lithium dendrites are continuously generated or high-resistance lithium by-products are generated due to local non-uniformity of current density during charging and discharging, whereby failure occurs due to a short circuit or overvoltage during charging and discharging, or battery capacity deteriorates.

The lithium metal electrode according to an embodiment includes a protective layer including amorphous carbon, thereby improving not only output characteristics and lifespan characteristics of the lithium metal electrode but also structural stability.

Specifically, by including the protective layer 30 including amorphous carbon, the lithium metal electrode of the present embodiment may serve not only to improve ionic conductivity, but also to improve strength of the protective layer 30 and physically block dendrites during dendrite growth in the lithium electrode, thereby preventing a short circuit between electrodes and improving charge/discharge lifespan.

The amorphous carbon may be one or more selected from the group consisting of acetylene black, Super P black, carbon black, Denka black, activated carbon, graphite, hard carbon, and soft carbon, but is not limited thereto.

In an embodiment, the protective layer 30 may include a binder. The binder may be an aqueous binder, and the aqueous binder may be one or more selected from the group consisting of rubber-based binders selected from acrylonitrile-butadiene rubber, styrene-butadiene rubber (SBR), and acrylic rubber, and polymer resins such as hydroxyethyl cellulose, carboxymethyl cellulose, and polyvinylidene fluoride, but is not limited thereto.

In an embodiment, the binder may be included in an amount of 5 wt% to 15 wt% as a solid content based on 100 wt% of the amorphous carbon in the protective layer 30. Specifically, the content of the binder means that, when the amorphous carbon is 100 wt%, the binder is further included in an amount of 5 wt% to 15 wt%. Specifically, the binder may be included in an amount of 6 wt% to 12 wt%, and more specifically 6 wt% to 10 wt%. Specifically, the content of the binder means a solid content, and the same content range may be maintained in a final product, that is, a lithium metal negative electrode.

When the content of the binder satisfies the above range, particles constituting the protective layer 30 can be effectively bound to form a protective layer 30 having excellent performance without causing deterioration of battery energy density due to an increase in weight and volume, thereby further improving lifespan characteristics of the secondary battery. When the content of the binder is excessively smaller than the above range, porosity may be excellent, but there is a problem in that bonding strength of the protective layer 30 is excessively reduced. When the content of the binder is excessively greater than the above range, bonding strength or hardness of the protective layer 30 may be increased, but porosity in the protective layer decreases, which is disadvantageous for electrodeposition.

In an embodiment, the protective layer 30 may have a thickness of 0.01 µm to 50 µm. Specifically, the protective layer 30 may have a thickness of 1 µm to 20 µm. When the thickness of the protective layer satisfies the above range, due to an effect obtained by including the amorphous carbon and the silicate clay mineral, formation of lithium dendrites on the surface of the protective layer can be prevented, and lithium ions can pass through and be conducted well inside the protective layer, whereby lithium can be precipitated on a lower surface of the protective layer.

When the thickness of the protective layer is excessively small, there is a problem in that the protective layer cannot function as a protective layer. When the thickness of the protective layer is excessively large, there are problems in that resistance of the protective layer becomes too high, which may cause an increase in overvoltage during operation of a secondary battery, and battery energy density decreases due to increases in weight and volume. However, the thickness of the protective layer may be variably adjusted according to design of the secondary battery structure.

In an embodiment, the protective layer 30 may include ceramic particles. Specifically, the ceramic particles may be one or more selected from the group consisting of particles having low electronic conductivity and high lithium-ion conductivity, such as Li₂TiO₃, LiNbO₃, LiTaO₃, LiZrO₃, Li₄Ti₅O₁₂, Li₂CO₃, Li₃BO₃, and SrTiO₃, but are not limited thereto.

In an embodiment, in the protective layer 30, the amorphous carbon and the ceramic particles may be in a weight ratio of 97:3 to 70:30. Specifically, the weight ratio may be 98.5:1.5 to 70:30. As the weight ratio satisfies the above-described range, a battery with improved charge/discharge characteristics can be implemented by improving lithium ion conductivity.

In an embodiment, a bonding strength between the current collector 11 and the protective layer 30 may be 30 mN/cm to 80 mN/cm. Specifically, the bonding strength may be 40 mN/cm to 80 mN/cm, and more specifically 48 mN/cm to 75 mN/cm. The bonding strength was measured between the protective layer and the current collector using a peel strength tester.

As the bonding strength satisfies the above-described range, bonding force between the current collector and the protective layer is increased, and movement of lithium is smoothly performed, thereby improving lifespan characteristics of the battery. When the bonding strength exceeds the upper limit of the above-described range, there is a problem in that bonding force between the protective layer 30 and the current collector 11 is too strong, and thus lithium is not easily electrodeposited on the lower surface of the protective layer 30. When the bonding strength is below the lower limit of the above-described range, peeling may occur between the protective layer 30 and the current collector 11 during an electrodeposition process or a handling process, and the protective layer 30 itself may be easily damaged.

In an embodiment, the lithium metal electrode may further include a coating layer (not shown) on the protective layer 30. The coating layer is formed by a reaction between electrodeposited lithium metal of the lithium supply source 40 and a plating solution during manufacture of the metal layer 12, and the thickness, composition, properties, and the like of the coating layer can be controlled by controlling the composition of the plating solution used and conditions of the electrodeposition process.

In an embodiment, the coating layer may include at least a portion of LiF. LiF may be formed by including, as at least one solvent among a plurality of solvents used in the electrodeposition process, a solvent having a high dielectric constant. Specifically, by increasing salt decomposition dissociation of the solvent of the plating solution for electrodeposition, a salt decomposition reaction is suppressed and a solvent decomposition reaction is promoted during electrodeposition, whereby a sufficient LiF coating layer may be formed inside and/or on the surface of the protective layer. By including the coating layer including at least a portion of LiF, lifespan can be improved and dendrite growth can be prevented due to high ionic conductivity during battery operation.

In an embodiment, the coating layer may have a thickness of 2 nm to 2 µm. Specifically, the coating layer may have a thickness of 10 nm to 500 nm. When the thickness of the coating layer is excessively large, lithium ion conductivity decreases and interfacial resistance increases, thereby deteriorating charge/discharge characteristics when applied to a battery. When the thickness of the coating layer is excessively small, the coating layer may be easily lost in the process of applying the lithium metal electrode according to the embodiment to a battery. Accordingly, the coating layer may have a small thickness within the above thickness range and may be uniformly and densely formed over the entire surface of the metal layer 12 and the protective layer 30.

Referring to FIG. 1B, in an embodiment, the lithium metal electrode 100 includes the current collector 11 and the metal layer 12 positioned on at least one surface of the current collector 11 and configured by mixing lithium and a lithium alloy. Here, the lithium alloy may be formed by alloying a lithiophilic component included in a metal layer 30 formed on the current collector 11 and lithium precipitated from the lithium supply source 40 by applying a current between the current collector 11 and the lithium supply source 40.

The metal layer 12 may include a lithiophilic metal. Here, the lithiophilic metal may be, for example, at least one selected from the group consisting of In, Ag, Sn, Zn, Si, Al, and Bi, but is not limited thereto.

In an embodiment, the metal layer 12 includes a lithiophilic metal. When the metal layer 12 including a lithiophilic metal is formed as described above, free energy of nucleation can be lowered in an early stage of nucleation of lithium particles in the electrodeposition process, and thus a lithium metal layer having a coarse particle structure can be formed even under high-current and overvoltage conditions.

In an embodiment, the metal layer 12 may have a thickness of 1 µm to 100 µm, and more specifically 5 µm to 30 µm. In an embodiment, when the metal layer 12 satisfies the above thickness range, not only can the energy density of the battery be maximized while improving charge/discharge lifespan of the battery, but also time and cost of the electrodeposition process can be minimized when forming the metal layer 12.

When the thickness of the metal layer is excessively thin, initial Coulombic efficiency is reduced due to initial irreversibility and charge/discharge performance deteriorates because surplus lithium is insufficient. When the thickness of the metal layer is excessively thick, not only does energy density of the battery decrease, but also process time and the amount of metal raw materials used increase when forming the metal layer.

In an embodiment, the metal layer 12 includes the protective layer 30 positioned on a surface of the metal layer 12, and may include a coating layer inside and/or on a surface of the protective layer 30. Detailed descriptions of the protective layer 30 and the coating layer may refer to the description provided above with reference to FIG. 1A.

FIG. 2 is a schematic view of a method for manufacturing the lithium metal electrode of the present invention.

Referring to FIG. 2, a method for manufacturing a lithium metal electrode according to an embodiment includes forming a coating layer 20 on at least one surface of a current collector 11 using a coating composition including a lithiophilic component, forming a protective layer 30 on a surface of the coating layer 20 using a slurry including amorphous carbon, placing the current collector 11 on which the coating layer 20 and the protective layer 30 are formed in a plating solution 50 and then placing a lithium supply source 40 at a predetermined distance from the protective layer 30, and applying a current between the current collector and the lithium supply source 40 to form a metal layer including a lithium alloy in which the lithiophilic component included in the coating layer and lithium precipitated from the lithium supply source 40 are alloyed.

The step of forming the coating layer 20 on at least one surface of the current collector 11 using the coating composition including the lithiophilic component may coat an alloy material on at least one surface of the current collector. The alloy material may be, for example, at least one selected from the group consisting of In, Ag, Sn, Zn, Si, Al, and Bi, but is not limited thereto.

In an embodiment, the step of forming the coating layer 20 may be performed using at least one method of electroplating, electroless plating, sputtering, electron beam deposition, and thermal vapor deposition. For example, the step of forming the coating layer may be performed by an electroless plating method.

Meanwhile, in the step of forming the coating layer 20, the thickness of the coating layer 20 formed on at least one surface of the current collector may be 0.001 µm to 10 µm, specifically 0.01 µm to 1 µm, more specifically 150 nm to 400 nm, more specifically 200 nm to 400 nm, and still more specifically 250 nm to 350 nm.

When the thickness of the coating layer 20 is excessively small, the coating layer 20 is insufficient to perform a role of forming a lithium alloy with lithium, and when the thickness is excessively large, a large amount of cost and time are consumed in forming the coating layer 20, thereby reducing production efficiency and economic feasibility, and the weight and mass of the battery increase, resulting in a problem of reduced energy density.

The protective layer 30 may be formed on a surface of the coating layer 20 using a slurry including amorphous carbon. The protective layer 30 may be formed by applying a slurry formed by mixing the amorphous carbon and a binder in a solvent using at least one method among a doctor blade method, a dip method, a reverse roll method, a direct roll method, a gravure method, an extrusion method, and a brush coating method.

In the step of forming the protective layer 30 on the surface of the coating layer 20, the solvent in the slurry may be formed by mixing a first solvent and a second solvent having different boiling points. Specifically, the solvent in the slurry may be a plurality of solvents and may include the first solvent and the second solvent.

In an embodiment, the second solvent may be a solvent having a higher boiling point than the first solvent. Specifically, the solvent in the slurry may be formed by mixing solvents having different boiling points. When the solvent is a single solvent, the solvent in the slurry for forming the protective layer exits and solids simultaneously settle, and thus there is a problem in that it is difficult to secure a structure of a protective layer having high porosity. In contrast, by including a plurality of solvents having different boiling points, the low-temperature solvent first exits near the volatilization point of the low-temperature solvent, while the high-temperature solvent remains, and thereafter, the high-temperature solvent exits near the volatilization point of the high-temperature solvent, thereby forming a structure having high porosity.

In an embodiment, a content of the first solvent may be greater than a content of the second solvent. Since the content of the first solvent is higher than the content of the second solvent, it is possible to prevent a problem in which pores are excessively formed and adhesion strength decreases.

In an embodiment, a ratio of the first solvent to the second solvent may be 60:40 to 90:10. Specifically, the ratio may be 70:30 to 80:20. As the ratio satisfies the above-described range, porosity in the protective layer is formed within an appropriate range, thereby providing advantages in bonding strength of the protective layer, maximum electrodepositable current, and charge/discharge characteristics of the battery.

When the first solvent is excessive in the ratio, most of the solvent simultaneously volatilizes at the boiling point of the first solvent and solids settle, causing a problem in that it is difficult to obtain a microstructure having high porosity. When the second solvent is excessive in the ratio, not only is a high temperature required to completely volatilize the second solvent having a high boiling point, but in some cases, the second solvent remains even after drying of the slurry.

In an embodiment, a boiling point difference between the first solvent and the second solvent may be 50°C or more. The boiling point difference may mean a value obtained by subtracting the boiling point of the first solvent having a low boiling point from the boiling point of the second solvent having a high boiling point. Specifically, the boiling point difference may be 50°C to 150°C. More specifically, the boiling point difference may be 70°C to 120°C.

When the boiling point difference satisfies the above-described range, porosity in the protective layer is formed within an appropriate range, and bonding strength of the protective layer, maximum electrodepositable current, and charge/discharge characteristics may be excellent. When the boiling point difference is excessively greater than the above-described range, since the slurry must be dried at two boiling points, there is a problem in terms of the length or configuration of the apparatus when drying the slurry using a continuous apparatus. When the boiling point difference is excessively smaller than the above-described range, the first solvent and the second solvent volatilize simultaneously, causing a problem in that it is difficult to obtain a microstructure having high porosity.

In an embodiment, the binder may be added in an amount of 5 wt% to 15 wt%, specifically 4 wt% to 12 wt%, and more specifically 6 wt% to 10 wt%, based on 100 wt% of the entire amorphous carbon or amorphous carbon and ceramic particles in the slurry. Specifically, the content of the binder means a solid content, and the same content range may be maintained in a final product, that is, a lithium metal negative electrode.

When the content of the binder satisfies the above range, particles constituting the protective layer 30 can be effectively bound to form a protective layer 30 having excellent performance without causing deterioration of battery energy density due to an increase in weight and volume, thereby further improving lifespan characteristics of the secondary battery. When the content of the binder is excessively smaller than the above range, porosity may be excellent, but there is a problem in that bonding strength of the protective layer 30 is excessively reduced. When the content of the binder is excessively greater than the above range, bonding hardness of the protective layer 30 may be increased, but porosity in the protective layer decreases, which is disadvantageous for electrodeposition.

As described above, when the second solvent having a high boiling point is used, a high amount of binder can be added, and at the same time, porosity of the manufactured protective layer can be controlled to be high, thereby providing an advantage of facilitating electrodeposition.

In an embodiment, the step of forming the protective layer 30 may include drying a solvent. In an embodiment, the drying step may be performed at a temperature higher than the boiling point of the first solvent. As the drying step is performed at a temperature higher than the boiling point of the first solvent, the solvent is appropriately volatilized, and an electrode having the porosity of the present invention can be manufactured.

In an embodiment, the step of forming the protective layer 30 on the surface of the coating layer 20 may include a first drying step and a second drying step. Specifically, the step of forming the protective layer 30 on the surface of the coating layer 20 may include drying the slurry at different temperatures.

In an embodiment, the first drying step may be performed in a temperature range of 90°C or higher. The first drying step may be a step in which the first solvent having a low boiling point is dried. As the first drying step is performed in the above-described temperature range, only the first solvent volatilizes and the second solvent remains, thereby preventing settling of solids, and thereafter, the high-temperature solvent exits near the volatilization point of the second solvent, thereby providing an advantage in that a structure having high porosity can be formed.

When the first drying step exceeds the upper limit of the above-described range, the second solvent also volatilizes simultaneously, causing a problem in that it is difficult to obtain a microstructure having high porosity. When the first drying step is below the lower limit of the above-described range, there is a problem in that the first solvent is not easily volatilized.

In an embodiment, the second drying step may be performed in a temperature range of 185°C or higher. The second drying step may be a step in which the second solvent having a high boiling point is dried. Specifically, the second drying step may be performed in a temperature range of 190°C to 250°C, and more specifically 200°C to 230°C. As the second drying step is performed in the above-described temperature range, the remaining second solvent volatilizes, thereby providing an advantage in that pores are formed in the protective layer.

When the second drying step exceeds the upper limit of the above-described range, there is a problem in that the binder included in the protective layer is decomposed. When the second drying step is below the lower limit of the above-described range, there is a problem in that the second solvent remains even after drying of the slurry.

In an embodiment, in the step of forming the protective layer 30, the thickness of the protective layer that promotes lithium ion conduction and is formed on the surface of the alloy material coating layer may be 0.01 µm to 50 µm, and more specifically 1 µm to 20 µm.

After the step of forming the protective layer 30, a step of placing the current collector, on which the coating layer 20 and the protective layer 30 are sequentially formed, in the plating solution 50 and then placing the lithium supply source 40 at a predetermined distance from the current collector 11, and a step of applying a current between the current collector 11 and the lithium supply source 40 to form the metal layer 12 are performed.

Specifically, after the current collector 11 on which the coating layer 20 and the protective layer 30 are formed is placed in the plating solution, the lithium supply source 40 is placed at a predetermined distance from the protective layer 30. The lithium supply source 40 may be, for example, lithium metal, a lithium alloy, a foil in which the lithium metal or lithium alloy is pressed onto a current collector, a plating solution in which a lithium salt is dissolved, or the like.

The plating solution 50 may be prepared by dissolving a lithium salt in a plurality of solvents. Specifically, the lithium salt may be LiCl, LiBr, LiI, LiCO₃, LiNO₃, LiFSI, LiTFSI, LiBF₄, LiPF₆, LiAsF₆, LiClO₄, LiN(SO₂CF₃)₂, LiBOB, or a combination thereof. The concentration of the lithium salt may be 1.0 M to 3.0 M based on the entire electrolyte solution.

Specifically, in the present embodiment, the plating solution 50 is characterized by including a nitrogen-based compound as at least one of the lithium salt and the plurality of solvents. The nitrogen-based compound may include, for example, one or more selected from the group consisting of lithium nitrate, lithium bis(fluorosulfonyl)imide, lithium bis(trifluoromethane sulfonimide), ε-caprolactam, N-methyl-ε-caprolactam, triethylamine, and tributylamine.

Among the nitrogen-based compounds, at least one of lithium nitrate, lithium bis(fluorosulfonyl)imide, and lithium bis(trifluoromethane sulfonimide) may be used as a lithium salt.

Among the nitrogen-based compounds, at least one of ε-caprolactam, N-methyl-ε-caprolactam, triethylamine, and tributylamine may be used as a non-aqueous solvent.

The plating solution 50 may be prepared using only the nitrogen-based compound, but may include a general non-aqueous solvent as an auxiliary solvent in consideration of viscosity and the like of the plating solution 50.

The auxiliary solvent may include, for example, one or more selected from the group consisting of ethylene carbonate, propylene carbonate, dimethyl carbonate, ethyl methyl carbonate, diethyl carbonate, 1,2-dimethoxyethane, diethylene glycol dimethyl ether, tetraethylene glycol dimethyl ether, tetrahydrofuran, 1,3-dioxolane, 1,4-dioxane, and 1,3,5-trioxane.

In an embodiment, the auxiliary solvent may be included in an amount of 5 wt% to 70 wt%, preferably 10 wt% to 60 wt%, based on 100 wt% of the entire plating solution 50, but is not limited thereto. However, when the auxiliary solvent is included within the above range, the viscosity of the plating solution 50 is appropriate, and thus the time required for the process of forming the lithium metal layer 12 can be shortened, but the present invention is not limited thereto.

In an embodiment, the plating solution 50 may further include a fluorine-based compound. When the plating solution 50 further includes the fluorine-based compound, there is an advantage in that properties of a coating layer 13 formed on the lithium metal layer 12 can be improved.

The fluorine-based compound may include, for example, one or more selected from the group consisting of lithium difluorophosphate, lithium hexafluorophosphate, lithium difluoro bisoxalato phosphate, lithium tetrafluoro oxalato phosphate, lithium difluoro oxalate borate, lithium difluoro oxalato borate, lithium tetrafluoro oxalato borate, fluoroethylene carbonate, difluoroethylene carbonate, and 1,1,2,2-tetrafluoroethyl 2,2,3,3-tetrafluoropropyl ether.

The fluorine-based compound may be included in an amount of 0.1 wt% to 30 wt%, preferably 1 wt% to 20 wt%, and more preferably 1 wt% to 10 wt%, based on 100 wt% of the entire plating solution 50. When the fluorine-based compound is included within the above range, the nitrogen-based compound and the fluorine-based compound in the plating solution 50 smoothly interact with each other, and thus there is an advantage in that the effect of improving properties of the coating layer formed on the lithium metal layer 12 is excellent. In addition, excessive generation of LiF by direct reaction between the fluorine-based compound and lithium is suppressed, which is advantageous in that electrochemical properties are excellent.

Next, after an insulating film is positioned between the current collector 11 and the lithium supply source 40, the current collector 11, the lithium supply source 40, and the insulating film may be stacked and constrained in both directions using a constraining device. As non-limiting examples of the constraining device, a method generally used in the art, such as a manual clamping method or a uniaxial pressing method using hydraulic pressure or pneumatic pressure, may be used.

In the step of applying a current to form a lithium metal layer on at least one surface of the current collector 11, the current density of the applied current may be in a range of 0.1 mA/cm² to 100 mA/cm², more specifically 0.2 mA/cm² to 50 mA/cm², 5 mA/cm² to 30 mA/cm², or 7 mA/cm² to 25 mA/cm².

In an embodiment, the time for applying the current may be in a range of 0.05 hours to 50 hours, and more specifically 0.25 hours to 25 hours.

In an embodiment, the step of applying the current to form the lithium metal layer on at least one surface of the current collector may be performed at least once at different current densities. The step of applying the current may be performed in multiple stages. Specifically, the step of applying the current in multiple stages may be performed by increasing the current density stepwise from a low current density to a high current density for predetermined times. For example, the step of applying the current may be performed by electrodeposition while increasing stepwise in the order of 0.1 mA/cm² to 0.3 mA/cm², 0.3 mA/cm² to 0.7 mA/cm², and 0.8 mA/cm² to 1.5 mA/cm².

In an embodiment, the step of applying the current to form the lithium metal layer 12 on at least one surface of the current collector 11 may include electrodepositing at a maximum current density in a range of 6 mA/cm² to 12 mA/cm². Specifically, the maximum current density may be in a range of 8 mA/cm² to 12 mA/cm². The maximum current density means a limit of current density at which lithium electrodeposited in the electrodeposition process can be precipitated between the protective layer 30 and the current collector 11.

The step of electrodepositing at the maximum current density may be, for example, a step finally performed after a step of precipitating in multiple stages in order to precipitate lithium between the current collector 11 and the protective layer 30. When the maximum current density satisfies the above range, lithium is appropriately precipitated between the current collector 11 and the protective layer 30, and there are advantages in that lifespan characteristics of the battery and bonding strength between the current collector 11 and the protective layer 30 are excellent.

When the maximum current density is outside the upper limit of the above range, since lithium is precipitated on the surface of the protective layer 30, there is a problem in that a targeted stabilized electrode structure cannot be secured. When the maximum current density is outside the lower limit of the above range, there is a problem of reduced productivity because the time for electrodepositing lithium increases.

In an embodiment, the step of applying the current to form the lithium metal layer on at least one surface of the current collector may include electrodepositing precipitated lithium to a thickness in a range of 5 µm to 15 µm. Specifically, the precipitated lithium may be electrodeposited to a thickness in a range of 8 µm to 12 µm. The thickness of the precipitated lithium may mean a height in a vertical direction of lithium disposed between the current collector 11 and the protective layer 30.

When the thickness of the precipitated lithium is outside the upper limit of the above thickness range, not only does energy density of the battery decrease, but also process time and the amount of metal raw materials used increase when forming the metal layer. When the thickness of the precipitated lithium is outside the lower limit of the above thickness range, there is a problem in that initial Coulombic efficiency is reduced due to initial irreversibility and charge/discharge performance deteriorates because surplus lithium is insufficient.

In an embodiment, in the step of applying the current to form the lithium metal layer 12 on at least one surface of the current collector 11, the thickness of the metal layer 12 including the lithium alloy may be controlled to 1 µm to 100 µm. Detailed descriptions of the thickness of the metal layer 12 may refer to the above description of FIG. 1A.

As described above, in the present embodiment, a lithium metal electrode 100 having a metal layer including the lithium metal layer 12 having a coarse particle structure can be manufactured under high-current conditions by preventing excessive generation of fine lithium particles and inducing initially generated lithium particles to grow well. In addition, the metal layer thus manufactured has excellent surface uniformity.

A lithium secondary battery according to another embodiment of the present invention includes a positive electrode, a negative electrode, and an electrolyte positioned between the positive electrode and the negative electrode. Here, the negative electrode may be the lithium metal electrode according to the present invention.

In an embodiment, the lithium secondary battery may include an electrode assembly including a positive electrode including a positive electrode active material, a negative electrode which is the lithium metal electrode of the present invention, and a separator disposed between the positive electrode and the negative electrode. The electrode assembly may be wound or folded and accommodated in a battery case.

Thereafter, an electrolyte may be injected into the battery case and sealed to complete a secondary battery. At this time, the battery case may have a cylindrical, prismatic, pouch, coin, or other shape.

The positive electrode may include a positive electrode active material layer and a positive electrode current collector. The positive electrode active material layer may include, for example, a Li compound including at least one metal among Ni, Co, Mn, Al, Cr, Fe, Mg, Sr, V, La, and Ce, and at least one non-metal element selected from the group consisting of O, F, S, P, and combinations thereof.

In an embodiment, a conductive material may be further added to the positive electrode active material layer. The conductive material may be, for example, carbon black, ultrafine graphite particles, fine carbon such as acetylene black, a nano metal particle paste, or the like, but is not limited thereto.

The positive electrode current collector serves to support the positive electrode active material layer. As the positive electrode current collector, for example, an aluminum foil, a nickel foil, or a combination thereof may be used, but is not limited thereto.

As the electrolyte filled in the lithium secondary battery, a non-aqueous electrolyte solution, a solid electrolyte, or the like may be used. Specifically, the electrolyte may be a solid electrolyte. The non-aqueous electrolyte solution may include, for example, a lithium salt such as lithium hexafluorophosphate or lithium perchlorate, and a solvent such as ethylene carbonate, propylene carbonate, or butylene carbonate. In addition, as the solid electrolyte, for example, a gel polymer electrolyte in which an electrolyte solution is impregnated in a polymer electrolyte such as polyethylene oxide or polyacrylonitrile, or an inorganic solid electrolyte such as LiI or Li₃N may be used.

The separator separates the positive electrode and the negative electrode and provides a movement path for lithium ions, and any separator commonly used in lithium secondary batteries may be used. Specifically, the separator may have low resistance to ion movement of the electrolyte and excellent electrolyte solution impregnation ability. The separator may be, for example, selected from glass fibers, polyester, polyethylene, polypropylene, polytetrafluoroethylene, or combinations thereof, and may be in the form of a nonwoven fabric or a woven fabric. Meanwhile, when a solid electrolyte is used as the electrolyte, the solid electrolyte may also serve as the separator.

Hereinafter, embodiments of the present invention will be described in detail. However, these are provided as examples, and the present invention is not limited thereto, and the present invention is only defined by the scope of the claims to be described below.

### <Experimental Example>

### Preparation of Negative Electrode for Lithium Secondary Battery

### <Example 1>

### <Formation of Alloy Material Coating Layer>

A lithium metal electrode for a lithium secondary battery according to an embodiment of the present invention was prepared by forming a coating layer of an alloy material on a current collector, forming a protective layer thereon, and then forming lithium or a lithium alloy layer between the current collector and the protective layer through an electrodeposition method.

In order to manufacture the lithium metal electrode for a lithium secondary battery according to an embodiment of the present invention, a coating layer including silver (Ag) was formed by plating both surfaces of a copper current collector to a thickness of about 300 nm by an electroless plating method.

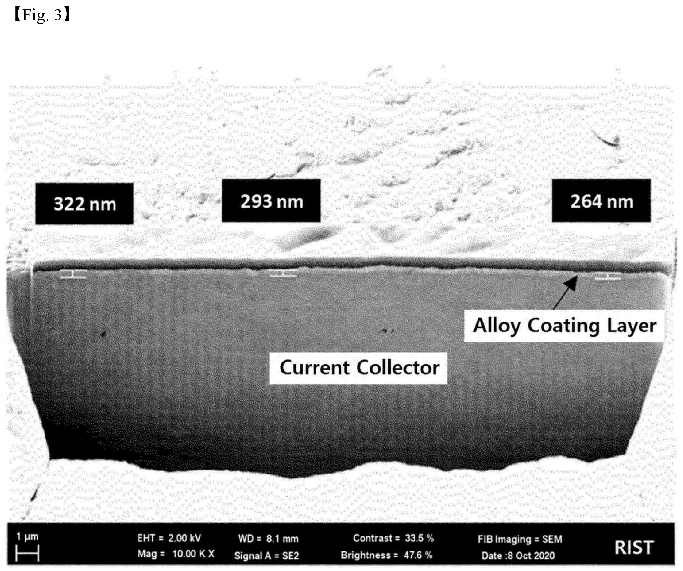

FIG. 3 is a scanning electron microscope (SEM) photograph of a cross-section when an alloy material coating layer is formed on a current collector according to an embodiment of the present invention.

Referring to FIG. 3, in order to manufacture the lithium metal electrode for a lithium secondary battery according to an embodiment of the present invention, it can be confirmed that the alloy material coating layer including silver (Ag) was formed by plating both surfaces of the copper current collector to a thickness of about 300 nm by an electroless plating method.

### <Formation of Protective Layer>

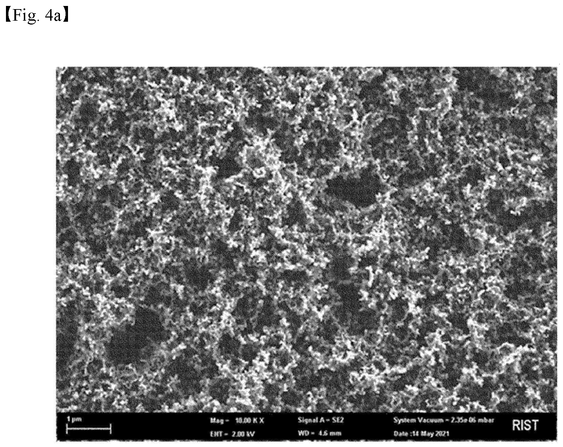

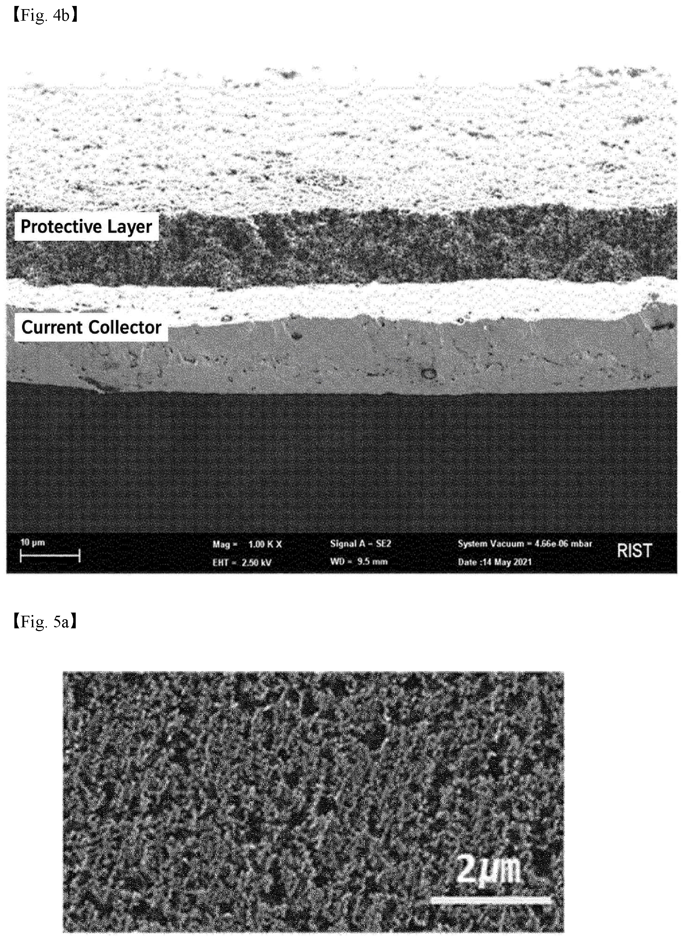

FIG. 4A is a scanning electron microscope (SEM) photograph of a surface when a protective layer 30 of the present invention is formed on a current collector coated with an alloy material according to an embodiment of the present invention, and FIG. 4B is a scanning electron microscope (SEM) photograph of a cross-section thereof.

Referring to FIGS. 4A and 4B, a protective layer having a thickness of about 5 µm was formed on the copper current collector on which the coating layer including silver (Ag) was formed by slurry coating using a comma coater. Specifically, as a slurry for forming the protective layer, H₂O as a first solvent, EG (ethylene glycol) as a second solvent, a binder, and amorphous carbon were mixed in amounts of 70.4 wt%, 17.6 wt%, 1 wt%, and 11.0 wt%, respectively, based on 100 wt% of the slurry. Specifically, 32 g of the first solvent, 8 g of EG as the second solvent, 0.15 g of carboxymethyl cellulose (CMC) as a binder, 0.3 g of styrene-butadiene rubber (SBR), and 5 g of acetylene black as amorphous carbon were mixed. At this time, the first solvent and the second solvent were mixed at a ratio of 80:20 when the total amount of the first solvent and the second solvent was 100. In addition, the binder was mixed in an amount of 9 wt% when the total amount of amorphous carbon was 100.

### <Lithium Electrodeposition Process>

Thereafter, in order to form a lithium alloy or pure lithium metal between the protective layer and the current collector, an electrodeposition process was used to remove lithium from a lithium supply source and precipitate the lithium between the protective layer and the current collector. The plating solution used for such electrodeposition was prepared by adding, to a 1,2-dimethoxyethane solvent, lithium bis(fluorosulfonyl)imide and lithium nitrate, which are nitrogen-based compounds, in amounts of 40 wt% and 10 wt%, respectively, based on 100 wt% of the entire plating solution, and adding fluoroethylene carbonate, which is a fluorine-based compound, in an amount of 10 wt% based on 100 wt% of the entire plating solution.

As the lithium supply source 40, a lithium metal plate having a purity of 99.9% or more and a thickness of 500 µm was pressed onto a copper current collector plate (Cu plate) and used. After the lithium supply source and the current collector were stacked in the plating solution in an electrically insulated state, a current was applied using a power supply in a manner in which the lithium supply source and the current collector were used as (+) and (-) electrodes, respectively, to precipitate lithium between the current collector and the protective layer.

Specifically, the current density of the electrodeposition process was increased stepwise in the order of 0.2 mA/cm², 0.5 mA/cm², and 1 mA/cm², electrodeposition was performed for 5 minutes at each current density, and then the maximum current density was set to 10 mA/cm². The electrodeposition time at the maximum current density was variably set according to the magnitude of the maximum current density by calculating a time at which a final cumulative lithium thickness of 10 µm could be electrodeposited. In addition, at this time, a coating layer was formed on the surface of the lithium metal layer by controlling a plating solution reductive decomposition reaction on the surface of the current collector and a reaction between the electrodeposited lithium metal layer and the plating solution.

FIGS. 5A to 5F show cross-sectional microstructures and pore image mappings of protective layers of Examples and Comparative Examples of the present invention.

In order to measure porosity of cross-sections of the protective layers of FIGS. 5A to 5F, mirror polishing was performed using an Ilion 697 processing apparatus manufactured by Gatan, and microstructures were observed using a GEMINI-500 scanning electron microscope manufactured by ZEISS. Porosity in the protective layer was measured as a porosity of a two-dimensional plane using an ImageJ image program developed by the National Institutes of Health (NIH) from photographs observed by the scanning electron microscope.

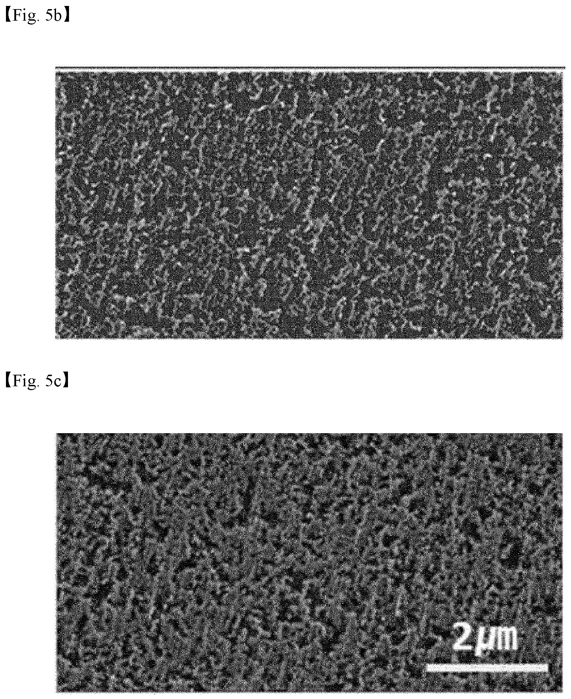

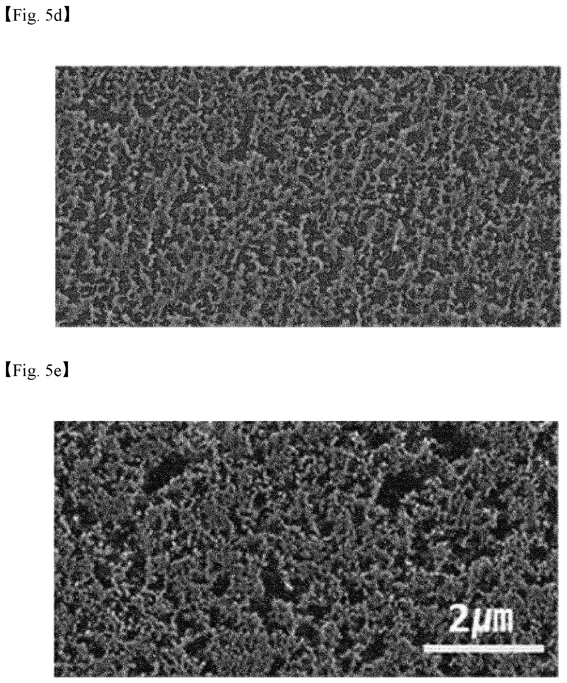

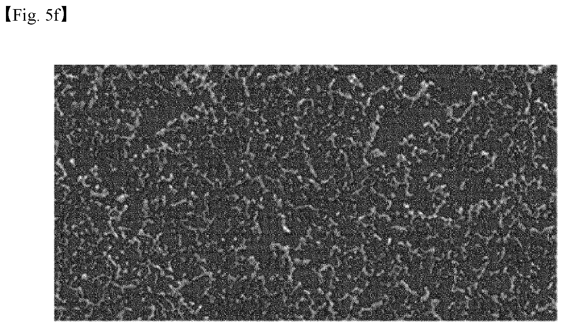

FIGS. 5A and 5B show a cross-sectional microstructure and pore image mapping of the protective layer of Example 1 of the present invention, and the pore area ratio was measured to be about 48.4%. FIGS. 5C and 5D show a cross-sectional microstructure and pore image mapping of the protective layer of Comparative Example 1 of the present invention, and the pore area ratio was measured to be about 27.4%. FIGS. 5E and 5F show a cross-sectional microstructure and pore image mapping of the protective layer of Comparative Example 3 of the present invention, and the pore area ratio was measured to be about 60.5%.

### <Example 2>

The same procedure as in Example 1 was performed, except that, in the step of forming the protective layer, a ratio of the first solvent to the second solvent was controlled to 90:10.

### <Example 3>

The same procedure as in Example 1 was performed, except that, in the step of forming the protective layer, a ratio of the first solvent to the second solvent was controlled to 60:40.

### <Example 4>

In the step of forming the protective layer, ethanol was used as the first solvent, and NMP was used as the second solvent. In addition, after slurry coating, drying of the solvent was performed in two stages. Primary drying was performed at 90°C, which was higher than the boiling point of ethanol, which was the first solvent, for 30 minutes, and secondary drying was performed at 210°C, which was higher than the boiling point of NMP, which was the second solvent, for 30 minutes.

### <Comparative Example 1>

The same procedure as in Example 1 was performed, except that, in the step of forming the protective layer, when adding a solvent, the second solvent was not added, 100% of the first solvent was used, water was used as the first solvent, and after coating, drying of the solvent was performed at 110°C, which was higher than the boiling point of water, for 30 minutes.

### <Comparative Example 2>

The same procedure as in Comparative Example 1 was performed, except that a binder content of 3 wt% was used in the step of forming the protective layer.

### <Comparative Example 3>

The same procedure as in Example 1 was performed, except that EGME (ethylene glycol monomethyl ether) was used as the second solvent, and a binder content of 8 wt% was used, in the step of forming the protective layer.

### Manufacture of All-Solid-State Battery

All-solid-state batteries were manufactured by applying the negative electrodes manufactured according to the above-described Examples and Comparative Examples, and charge/discharge lifespan was evaluated. For evaluation of the all-solid-state battery cells, a pressurized dedicated evaluation cell manufactured by Terra Leader, capable of maintaining an inert atmosphere, was used. For manufacture of the all-solid-state battery cells, a sulfide-based argyrodite (Li₆PS₅Cl) solid electrolyte was used as an electrolyte, and the electrolyte was formed into a pellet having a thickness of about 0.7 mm. In order to secure a dense electrolyte, pressure was applied at 370 MPa.

Lithium having a thickness of 0.5 mm was attached to one surface of the electrolyte as a reference electrode, and the negative electrodes manufactured according to the Examples and Comparative Examples were attached to the opposite surface. The reference electrode and the evaluation electrode were pressurized at a pressure of 50 MPa.

Lithium having a thickness of 0.5 mm was attached to one surface of the electrolyte as a reference electrode, and the negative electrodes manufactured according to the Examples and Comparative Examples were attached to the opposite surface.

### <Evaluation Example 1> - Content Range of First Solvent and Second Solvent

Table 1 below shows data for porosity of the protective layer, bonding strength, maximum electrodepositable current, and charge/discharge characteristics according to contents of solvents in the slurry and binder content conditions when forming the protective layer. The porosity of the protective layer, bonding strength, maximum electrodepositable current, and charge/discharge characteristics were measured by the following methods.

Porosity of protective layer (%): Mirror polishing was performed using an Ilion 697 processing apparatus manufactured by Gatan, and a microstructure was observed using a GEMINI-500 scanning electron microscope manufactured by ZEISS. The porosity in the protective layer was measured as a porosity of a two-dimensional plane using an ImageJ image program developed by the National Institutes of Health (NIH) from a photograph observed by a scanning electron microscope. A pore area ratio was confirmed through the measured image value.

Bonding strength (mN/cm): A 10 mm-wide tape (No. 360A, thickness: 0.08 mm, adhesion: 4.4 N/19 mm) made of a polyimide material manufactured by Nitto was brought into close contact with the protective layer, and bonding strength was measured through a tensile test using a peel strength tester (MCT-2150W, AND). At this time, the tensile speed was 50 mm/min, and the tensile test distance was set to within a total of 200 mm. The bonding strength was obtained as an average strength over a 100 mm section from a point corresponding to 50 mm in the tensile test.

Maximum current density (mA/cm²): The maximum current density means a limit of current density at which lithium electrodeposited according to the above process can be precipitated between the ion-concentration protective layer and the current collector, and the maximum current density was measured.

Number of charge/discharge performance cycles (cycles): The reference electrode and the evaluation electrode were attached to the solid electrolyte at a pressure of 50 MPa, and pressure was applied at 16 MPa in the dedicated evaluation cell during charge/discharge evaluation. The charge/discharge evaluation was performed by defining, as one cycle, charging at a constant current of 2 mA/cm² for 0.5 hours and discharging at a constant current of 2 mA/cm² for 0.5 hours. The charge/discharge lifespan was defined as ending when a short circuit occurred between the reference electrode and the evaluation electrode during charging and discharging or when a voltage between the two electrodes exceeded 2 V.

**[Table 1]**

| Classification | First Solvent | | | Second Solvent | | | Binder Content [%] |
|---|---|---|---|---|---|---|---|
| | Type | Boiling Point [°C] | Content [wt%] | Type | Boiling Point [°C] | Content [wt%] | |
| Example 1 | Water | 100 | 80 | EG | 198 | 20 | 9 |
| Example 2 | Water | 100 | 90 | EG | 198 | 10 | 9 |
| Example 3 | Water | 100 | 60 | EG | 198 | 40 | 9 |
| Example 4 | Ethanol | 78 | 80 | NMP | 202 | 20 | 9 |
| Comparative Example 1 | Water | 100 | 100 | - | - | - | 9 |
| Comparative Example 2 | Water | 100 | 100 | - | - | - | 3 |
| Comparative Example 3 | Water | 100 | 80 | EGME | 125 | 20 | 9 |
| EG: Ethylene glycol | | | | | | | |
| EGME: Ethylene glycol monomethyl ether | | | | | | | |

**[Table 2]**

| Classification | Porosity (%) | Bonding Strength [mN/cm] | Maximum Electrodepos itable Current [mA/cm²] | Charge/Disc harge Characteristi cs [cycles] |
|---|---|---|---|---|
| Example 2 | 45.3 | 55 | 8 | 817 |
| Example 3 | 51.8 | 58 | 12 | 872 |
| Example 4 | 47.2 | 62 | 10 | 717 |
| Comparative Example 1 | 27.4 | 53 | 4 | 476 |
| Comparative Example 2 | 52.4 | 11 | 10 | 481 |
| Comparative Example 3 | 38.2 | 51 | 6 | 566 |

Referring to Tables 1 and 2, it was confirmed that it is difficult to implement a structure having a high binder content and high porosity when a single-solvent slurry is used. Specifically, as in Comparative Example 1, the single-solvent slurry has a problem in that the solvent in the protective layer exits simultaneously and solids settle while the solvent exits, making it difficult to obtain a structure having high porosity. In the case of a slurry including a composite solvent as in the Examples, it was confirmed that, first, the low-temperature solvent preferentially exits near the volatilization point of the low-temperature solvent, and until that time, the high-temperature solvent remains in the slurry without exiting. Second, when drying is performed near the volatilization point of the high-temperature solvent, the high-temperature solvent exits, and the space from which the high-temperature solvent exits remains as pores, whereby a structure including a protective layer having high porosity can be obtained.

In addition, when the Examples are compared with Comparative Example 1, it was confirmed that, when the second solvent, which is a high-boiling-point solvent, is not used at all and the binder is added in an appropriate range, the porosity is excessively low, and the maximum electrodepositable current density is low. When the Examples are compared with Comparative Example 2, it was confirmed that, when the second solvent is not used and the binder content is low, porosity is appropriate but bonding strength is low because the binder content is low.

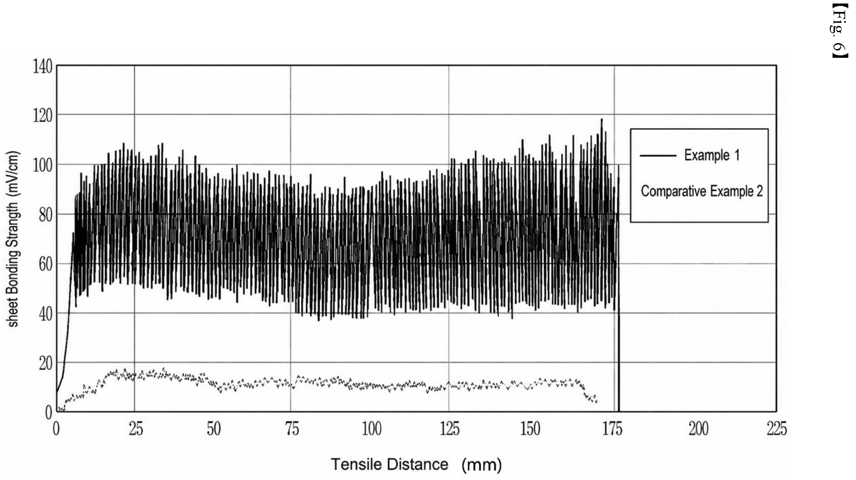

FIG. 6 shows measurement of bonding strength of protective layers of Examples and Comparative Examples of the present invention using a peel strength tester.

Referring to FIG. 6, bonding strength of Example 1 and Comparative Example 2 of the present invention was measured through a tensile test using a peel strength tester (MCT-2150W, AND) after a 10 mm-wide tape (No. 360A, thickness: 0.08 mm, adhesion: 4.4 N/19 mm) made of a polyimide material manufactured by Nitto was brought into close contact with the protective layer. At this time, the tensile speed was 50 mm/min, and the tensile test distance was set to within a total of 200 mm. The bonding strength was obtained as an average strength over a 100 mm section from a point corresponding to 50 mm in the tensile test. It was confirmed that the bonding strength of Example 1 was superior to the bonding strength of Comparative Example 2.

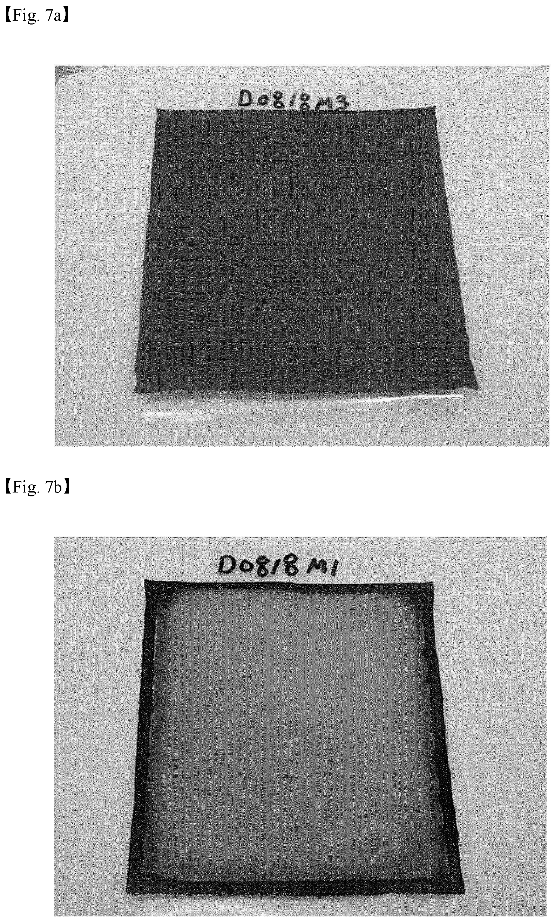

FIGS. 7A and 7B are photographs comparing electrodeposition appearances between a current collector and an ion-concentration protective layer when electrodeposition is performed at a maximum current density according to an embodiment of the present invention.

FIG. 7A is a photograph showing the appearance after electrodeposition of Example 1 when lithium is precipitated between the current collector and the protective layer when electrodeposition is performed at the maximum current density. FIG. 7B compares and shows the appearance when lithium is stacked on the protective layer when electrodeposition is performed at a current density exceeding the maximum current density.

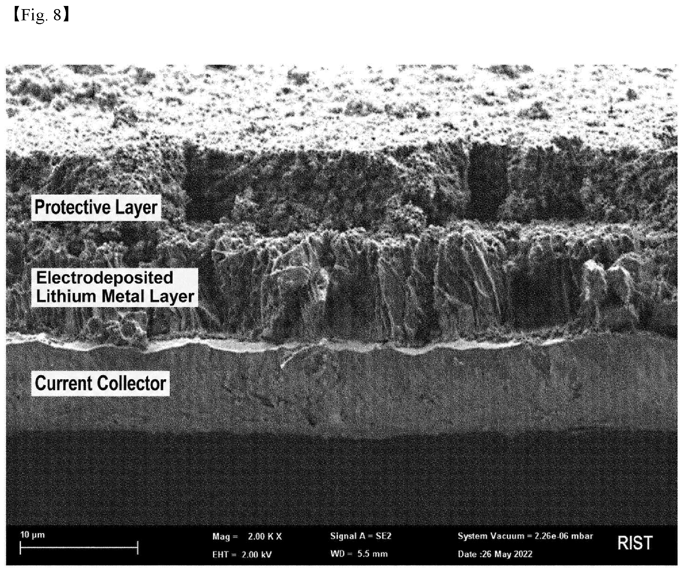

FIG. 8 shows a cross-sectional structure in which lithium is precipitated between a protective layer and a current collector by an electrodeposition process according to an embodiment of the present invention.

Referring to FIG. 8, a cross-sectional structure in which lithium is precipitated between the protective layer and the current collector through the lithium electrodeposition process can be confirmed.

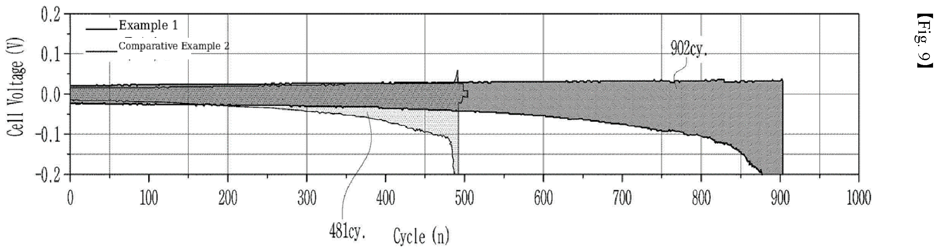

FIG. 9 shows charge/discharge lifespan results of Examples and Comparative Examples of the present invention.

Referring to FIG. 9, it can be confirmed that the charge/discharge lifespan evaluation result of Example 1 is high at 902 cycles, whereas the charge/discharge lifespan evaluation result of Comparative Example 2 is low at 481 cycles.

### <Evaluation Example 2> - Binder Content Range

### <Example 5>

The same procedure as in Example 1 was performed, except that, in the step of forming the protective layer, a ratio of the first solvent to the second solvent was controlled to 80:20, and a binder content was controlled to 6 wt%.

### <Example 6>

The same procedure as in Example 4 was performed, except that the binder content was controlled to 12 wt% in the step of forming the protective layer.

### <Comparative Example 3>

The same procedure as in Example 1 was performed, except that the binder content was controlled to 3 wt% in the step of forming the protective layer.

### <Comparative Example 4>

The same procedure as in Example 1 was performed, except that the binder content was controlled to 18 wt% in the step of forming the protective layer.

Table 4 below shows protective layer porosity, bonding strength, maximum electrodepositable current, and charge/discharge characteristics according to the content of the binder.

**[Table 3]**

| Classification | First Solvent | | | Second Solvent | | | Binder Content [%] |
|---|---|---|---|---|---|---|---|
| | Type | Boiling Point [°C] | Content [wt%] | Type | Boiling Point [°C] | Content [wt%] | |
| Example 1 | Water | 100 | 80 | EG | 198 | 20 | 9 |
| Example 5 | Water | 100 | 80 | EG | 198 | 20 | 6 |
| Example 6 | Water | 100 | 80 | EG | 198 | 20 | 12 |
| Comparative Example 3 | Water | 100 | 80 | EG | 198 | 20 | 3 |
| Comparative Example 4 | Water | 100 | 80 | EG | 198 | 20 | 18 |

**[Table 4]**

| Classification | Porosity (%) | Bonding Strength [mN/cm] | Maximum Electrodepos itable Current [mA/cm²] | Charge/Disc harge Characteristi cs [cycles] |
|---|---|---|---|---|
| Example 1 | 48.4 | 66 | 10 | 902 |
| Example 5 | 50.5 | 48 | 10 | 820 |
| Example 6 | 43.7 | 75 | 8 | 728 |
| Comparative Example 3 | 60.5 | 23 | 12 | 359 |
| Comparative Example 4 | 25.7 | 85 | 4 | 416 |

Referring to Tables 3 and 4, it was confirmed that, when the binder content is included in the range of the present invention as in Examples 1, 5, and 6, bonding strength, maximum electrodepositable current, and charge/discharge characteristics are superior to those of Comparative Examples 3 and 4. When the binder content is outside the lower limit as in Comparative Example 3, it was confirmed that porosity, bonding strength, and charge/discharge characteristics were inferior, and when the binder content is outside the upper limit as in Comparative Example 4, it was confirmed that porosity, maximum electrodepositable current, and charge/discharge characteristics were inferior.

As described above, it was confirmed that, in order to obtain a structure having a high binder content and high porosity, it is advantageous to use a solvent having a high boiling point.

The present invention is not limited to the above Examples and may be manufactured in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A lithium metal electrode comprising:
a current collector;
a metal layer positioned on at least one surface of the current collector and comprising a lithium alloy; and
a protective layer positioned on the metal layer and comprising amorphous carbon and a binder,
wherein the protective layer has a porosity of 30% to 60%, and
wherein a content of the binder is 5 wt% to 15 wt% based on 100 wt% of an entire amount of the amorphous carbon in the protective layer.

2. The lithium metal electrode of claim 1,
wherein a bonding strength between the current collector and the protective layer is 30 mN/cm to 80 mN/cm.

3. The lithium metal electrode of claim 1,
wherein the metal layer comprises a lithium alloy layer comprising an alloy made of lithium and a lithiophilic metal.

4. The lithium metal electrode of claim 3,
wherein the lithiophilic metal is at least one selected from the group consisting of In, Ag, Sn, Zn, Si, Al, and Bi.

5. The lithium metal electrode of claim 4,
wherein the metal layer comprises a lithium metal layer positioned on the lithium alloy layer.

6. The lithium metal electrode of claim 1,
wherein the protective layer further comprises ceramic particles.

7. The lithium metal electrode of claim 6,
wherein the amorphous carbon and the ceramic particles in the protective layer are in a weight ratio of 97:3 to 70:30.

8. A method for manufacturing a lithium metal electrode, comprising:
forming a coating layer on at least one surface of a current collector using a coating composition comprising a lithiophilic component;
forming a protective layer by applying a slurry onto a surface of the coating layer;
placing the current collector on which the coating layer and the protective layer are formed in a plating solution, and then placing a lithium supply source at a predetermined distance from the protective layer; and
applying a current between the current collector and the lithium supply source to form a metal layer comprising a lithium alloy in which the lithiophilic component included in the coating layer and lithium precipitated from the lithium supply source are alloyed,
wherein forming the protective layer on the surface of the coating layer comprises mixing, in the slurry, a first solvent and a second solvent having different boiling points.

9. The method for manufacturing a lithium metal electrode of claim 8,
wherein the second solvent has a higher boiling point than the first solvent.

10. The method for manufacturing a lithium metal electrode of claim 8,
wherein a ratio of the first solvent to the second solvent is 60:40 to 90:10.

11. The method for manufacturing a lithium metal electrode of claim 8,
wherein, in forming the protective layer on the surface of the coating layer, a content of a binder is 5 wt% to 15 wt% based on 100 wt% of an entire amount of amorphous carbon in the slurry.

12. The method for manufacturing a lithium metal electrode of claim 8,
wherein, in forming the protective layer on the surface of the coating layer, a difference between boiling points of the first solvent and the second solvent is 50°C or more.

13. The method for manufacturing a lithium metal electrode of claim 8,
wherein forming the protective layer on the surface of the coating layer comprises drying a solvent, and
wherein drying the solvent comprises a first drying step and a second drying step.

14. The method for manufacturing a lithium metal electrode of claim 13,
wherein, in forming the protective layer, the drying step is performed at a temperature higher than a boiling point of the first solvent.

15. The method for manufacturing a lithium metal electrode of claim 13,
wherein the first drying step is performed in a temperature range of 90°C or higher.

16. The method for manufacturing a lithium metal electrode of claim 13,
wherein the second drying step is performed in a temperature range of 185°C or higher.
